# EUROPÄISCHE PATENTSCHRIFT

(11) **EP 2 607 875 B1**
(45) Veröffentlichungstag und Bekanntmachung des Hinweises auf die Patenterteilung: **14.02.2018**
(21) Anmeldenummer: 11194612.5
(22) Anmeldetag: 20.12.2011
(51) Int. Cl.: G01L 9/00, G01L 19/00, G01L 19/06

(54) **Durchströmter Drucksensor und Fördereinrichtung mit einem durchströmten Drucksensor**
Pressure sensor through which a fluid flows and fluid delivery device with same
Capteur de pression d'un fluide en écoulement et distributeur de fluide doté d'un tel capteur de pression

(43) Veröffentlichungstag der Anmeldung: 26.06.2013
(73) Patentinhaber: ViscoTec Pumpen- und Dosiertechnik GmbH, 84513 Töging a. Inn (DE)
(72) Erfinder: Gantenhammer, Vinzenz, 84453 Mühldorf (DE); Kirmeier, Andreas, 84513 Töging am Inn (DE)
(74) Vertreter: Horn Kleimann Waitzhofer Patentanwälte PartG mbB

(56) Entgegenhaltungen:
- EP-A2- 0 124 308
- WO-A1-97/39679

## Beschreibung

Die vorliegende Erfindung betrifft einen von einem Fluid durchströmten Drucksensor und eine Fördereinrichtung mit einem solchen durchströmten Drucksensor.

Das technische Gebiet der Erfindung betrifft die Druckmessung von Fluiden, wie viskosen Medien oder Flüssigkeiten, wie beispielsweise Kleb- oder Dichtstoffen, Farben, Lacken, Lösemitteln, Suspensionen, viskosen Rohstoffen, Emulsionen, Pasten, Lebensmittel-Pasten, Ölen oder Fetten.

Den vielen Industrieprozessen, aber auch im Handel und im Gewerbe, werden solche viskose Medien über Ein- oder Mehrwegbehälter dem Verarbeiter durch den Hersteller oder Händler bereitgestellt.

Vom Verarbeiter werden zur Entnahme oder zur Weiterverarbeitung des viskosen Mediums Förder- und Dosiervorrichtungen eingesetzt. Nach oder auch während der Förderung des viskosen Mediums ist der aktuelle Druck des viskosen Mediums für den Verarbeiter bzw. für die Verarbeitung interessant.

Dosiervorrichtungen, welche für eine solche Dosierung geeignet sind, können auf einer Zahnradpumpe oder einer Exzenterschneckenpumpe basieren oder beispielsweise als eine Spindelfördereinrichtung ausgebildet sein. Eine solche Dosiervorrichtung kann auch als Ventil, beispielsweise als Spindelventil, als Druck-Zeit-Ventil oder als Volumenventil ausgebildet sein.

Es ist bekannt, einen Drucksensor in eine Förder- oder Dosiervorrichtung einzuschrauben, um den Druck des geförderten Fluids zu messen. Ein entsprechender Drucksensor ist aus dem Dokument WO 97/39679 A1 bekannt.

Dabei kann allerdings ein Totraum entstehen. Der entstandene Totraum kann die Wiederholbarkeit und/oder die Steuerbarkeit der Dosierung verschlechtern. Ferner kann in dem entstandenen Totraum Fluid aushärten. Infolge des ausgehärteten Fluids kann der Drucksensor nicht mehr optimal gereinigt werden. In einem solchen Fall ist nicht mehr sichergestellt, dass die Messergebnisse des Drucksensors korrekt sind.

Demnach ist es eine Aufgabe der vorliegenden Erfindung, einen Drucksensor vorzuschlagen, welcher obige Nachteile überwindet.

Die gestellte Aufgabe wird durch einen Drucksensor zum Messen eines Druckes eines den Drucksensor durchströmenden Fluids mit den Merkmalen des Anspruchs 1 sowie durch eine Fördervorrichtung zum Fördern eines Fluids mit den Merkmalen des Anspruchs 14 gelöst.

Demgemäß wird ein von einem Fluid durchströmter Drucksensor zum Messen eines Druckes des den Drucksensor durchströmenden Fluids vorgeschlagen. Der durchströmte Drucksensor hat ein Gehäuse, ein in dem Gehäuse angeordneten Kanal zum Fördern des Fluids von einem Eingangsabschnitt zu einem Ausgangsabschnitt, einen in dem Gehäuse eingebetteten Druckgeber zum Ausgeben eines zu dem Druck des den Kanal durchströmenden Fluids proportionalen elektrischen Signals, und einen zwischen dem Kanal und dem Druckgeber angeordneten Druckmittler aus zumindest einem Elastomer zum Übertragen des Druckes des den Kanal durchströmenden Fluids auf den Druckgeber.

Durch die Einbettung oder Integration des Druckgebers in das Gehäuse des Drucksensors wird jeglicher Totraum verhindert bzw. vermieden. Ferner wird der Drucksensor vorteilhafterweise von dem Fluid durchströmt. Folglich kann der vorliegende Drucksensor auch als Durchfluss-Drucksensor bezeichnet werden. Der Druckgeber kann auch als Druckwandler bezeichnet werden, da er den Druck des Fluids in dem Kanal des Drucksensors in ein elektrisches Signal wandelt. Das elektrische Signal liegt beispielsweise im Millivolt-Bereich.

Das Elastomer bildet insbesondere einen Mantel um den Kanal sowie den zumindest einen Teil des Druckmittlers aus. Das Elastomer ist damit Teil des Druckmittlers und daher Teil des Drucksensors, der folglich ein von dm Fluid durchströmter Drucksensor ist. Dazu bildet das Elastomer nicht nur den Mantel, sondern auch eine Erhöhung beispielsweise in Form eines in Richtung des Druckmittlers ragenden Zylinders Insgesamt kann das den Mantel des Kanals bildende Elastomer auch als Inliner bezeichnet werden.

Bei einer Ausführungsform ist der Druckgeber auf einem Chip integriert. Die Integration des Druckgebers auf einem Chip oder Mikrochip hat den Vorteil der

Minimierung der Baugröße des Druckgebers. Folglich kann der Druckgeber einfach in den Drucksensor integriert werden.

Bei einer Ausführungsform der Vorrichtung ist der Chip mit einer Trägerplatine verbunden, welche dazu eingerichtet ist, den Chip zu haltern und das von dem Druckgeber ausgegebene elektrische Signal an eine mit der Trägerplatine gekoppelte Auswerteelektronik weiterzuleiten. Zur Reduktion des horizontal notwendigen Bauraums kann die Trägerplatine auch aus zwei einzelnen Platinen gebildet werden, welche über ein Flexband verbunden werden und welche in horizontaler Richtung übereinander angeordnet werden.

Bei einer weiteren Ausführungsform ist die Auswerteelektronik in dem Gehäuse integriert. Die Auswerteelektronik ist beispielsweise als ein Microcontroller ausgebildet. Durch die Integration der Auswerteelektronik in das Gehäuse des Drucksensors kann dieser ein vorverarbeitetes elektrisches Signal ausgeben, welches direkt proportional zu dem gemessenen Druck des Fluids in dem Kanal des Drucksensors ist.

Bei einer weiteren Ausführungsform ist der Druckgeber mittels Verguss eines viskoelastischen Vergussmaterials in dem Gehäuse zwischen dem Druckmittler und der Trägerplatine eingebettet. Viskoelastisch bedeutet dabei, dass das Vergussmaterial teilweise elastischer ist und teilweise viskoses Verhalten hat. Die Viskoelastizität des Vergussmaterials beruht auf einer verzögerten Gleichgewichtseinstellung der Makromoleküle des Vergussmaterials zueinander bei oder nach mechanischer Belastung.

Bei einer weiteren Ausführungsform ist das Vergussmaterial ein Silikon oder ein Epoxydharz. Silikon ist ein besonders gut geeignetes Vergussmaterial zum Verguss des Druckgebers in dem Gehäuse zwischen dem Elastomer des Inliners und der Trägerplatine.

Bei einer weiteren Ausführungsform ist der Druckmittler aus dem Elastomer und teilweise aus dem Vergussmaterial gebildet.

Bei einer weiteren Ausführungsform ist das Elastomer des Druckmittlers ein Perfluor-Elastomer.

Bei einer weiteren Ausführungsform sind der Druckgeber und der Drucksensor fest miteinander verbunden.

Bei einer weiteren Ausführungsform weist der Eingangsabschnitt des Kanals einen Luer-Konus mit weiblichem Innenkegel und der Ausgangsabschnitt des Kanals einen Luer-Konus mit männlichem Außenkegel auf.

Bei einer weiteren Ausführungsform weist der Eingangsabschnitt des Kanals einen Luer-Konus mit männlichem Außenkegel und der Ausgangsabschnitt des Kanals einen Luer-Konus mit weiblichem Innenkegel auf. Durch den Luer-Konus kann der Drucksensor einfach und sicher mit einem Fördermittel, wie einer Dosiervorrichtung oder einem Förderschlauch, gekoppelt werden.

Bei einer weiteren Ausführungsform ist der Druckgeber als ein piezo-elektrischer Druckgeber ausgebildet.

Ferner wird eine Fördervorrichtung zum Fördern eines Fluids vorgeschlagen, welche einen wie oben beschriebenen Drucksensor sowie ein erstes Fördermittel zum Fördern des Fluids, welches mit dem Eingangsabschnitt des Drucksensors gekoppelt ist, und ein zweites Förderelement zum Fördern des Fluids umfasst, welches mit dem Ausgangsabschnitt des Drucksensors gekoppelt ist.

Bei einer Ausführungsform sind das erste Förderelement und das zweite Förderelement jeweils als ein Förderschlauch ausgebildet. Das erste Fördermittel kann auch als eine Dosiervorrichtung, wie beispielsweise eine Exzenterschneckenpumpe, ausgebildet sein, wohingegen das zweite Fördermittel beispielsweise als eine Dosiernadel ausgebildet ist.

Beispielsweise hat das Fluid eine Viskosität von 0,1 bis 10⁷ mPas, bevorzugt von 10¹ bis 10⁵ mPas, besonders bevorzugt von 10³ bis 10⁴ mPas.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Schnittansicht eines Ausführungsbeispiels eines Drucksensors;
- Figur 2: eine perspektivische Ansicht des Ausführungsbeispiels des Drucksensors nach Figur 1; und
- Figur 3: eine Seitenansicht des Ausführungsbeispiels des Drucksensors nach Figur 2.

In allen Figuren sind gleiche bzw. funktionsgleiche Mittel und Einrichtungen - sofern nichts anderes angegeben - mit denselben Bezugszeichen versehen.

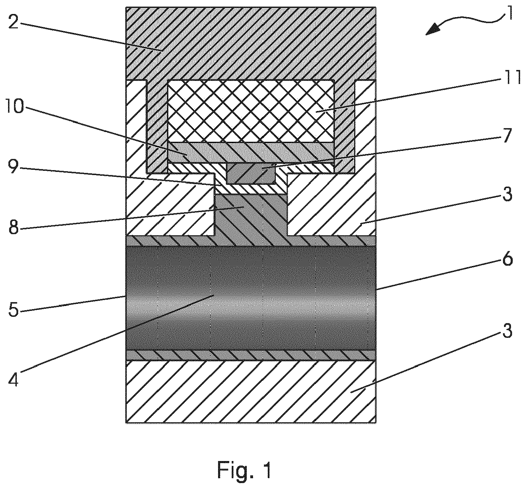

In Figur 1 ist eine schematische Schnittansicht eines Ausführungsbeispiels eines von einem Fluid durchströmten Drucksensors 1 dargestellt.

Der Drucksensor 1 ist zum Messen des Druckes des den Drucksensor 1 durchströmenden Fluids geeignet. Der Drucksensor 1 hat ein Gehäuse 2, 3 aus einem Gehäuseoberteil 2 und einem Gehäuseunterteil 3.

In dem Gehäuseunterteil 3 ist ein Kanal 4 oder ein Rohr zum Fördern des Fluids von einem Eingangsabschnitt 5 des Drucksensors 1 zu einem Ausgangsabschnitt 6 des Drucksensors 1 angeordnet. Die Mantelfläche des Kanals 4 weist insbesondere ein Elastomer auf, welches auch als Inliner bezeichnet werden kann.

Ferner ist in dem Gehäuse 2, 3 ein Druckgeber 7 eingebetet. Der Druckgeber 7 gibt ein zu dem Druck des den Kanal 4 durchströmenden Fluids proportionales elektrisches Signal aus, beispielsweise im Millivolt-Bereich. Der Druckgeber 7 ist auf einem Chip oder Mikrochip integriert und kann auch als Druckwandler bezeichnet werden, da er den vorherrschenden Druck des Fluids in dem Kanal 4 in ein dazu proportionales elektrisches Signal wandelt.

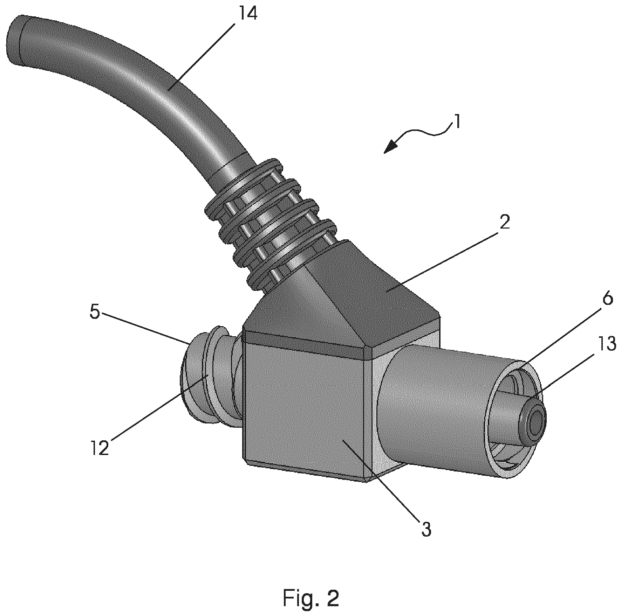

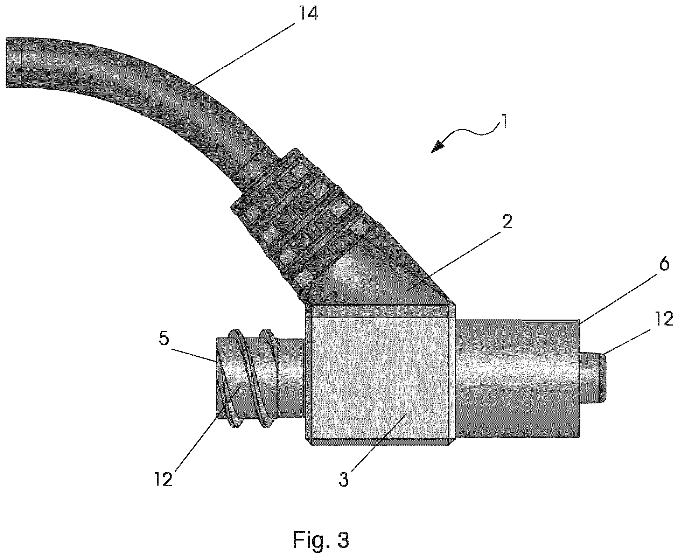

Der als Mikrochip 7 ausgebildete Druckgeber ist mit einer Trägerplatine 10 verbunden. Die Trägerplatine 10 ist dazu eingerichtet, den Mikrochip 7 zu haltern und das von dem Mikrochip 7 ausgegebene elektrische Signal an eine mit der Trägerplatine 10 gekoppelte Auswerteelektronik 11 weiterzuleiten. Die Auswerteelektronik 11 ist in dem Gehäuse 2, 3 integriert und beispielsweise als ein Mikrocontroller ausgebildet. Der Mikrocontroller 11 leistet Funktionen insbesondere im Bereich der Signalvorverarbeitung des von dem Druckgeber 7 ausgegebenen elektrischen Signals. Der Mikrocontroller 11 ist über ein Kabel 14 mit einem Prozessor oder eine Auswerteeinrichtung koppelbar (siehe Fig. 2 und 3).

Des Weiteren ist zwischen dem Kanal 4 und dem Druckgeber 7 ein Druckmittler 8, 9 vorgesehen, der zum Übertragen des Druckes des den Kanal 4 durchströmenden Fluids auf den Druckgeber 7 eingerichtet ist. Der Druckmittler 8, 9 der Fig. 1 besteht aus einem hochgezogenen Bereich des Elastomers 8 sowie einem Teil eines Vergussmaterials 9. Das Vergussmaterial 9 ist dazu verwendet, den Druckgeber 7 mittels Verguss in dem Gehäuse 2, 3 zwischen dem Elastomer 8 und der Trägerplatine 10 einzubetten. Der hochgezogene Rand kann auch als Aufdickung des Elastomers 8 bezeichnet werden. Das Elastomer 8 ist beispielsweise ein Perfluor-Elastomer. Das Vergussmaterial 9 besteht zum Beispiel aus Silikon oder einem Epoxyharz. Insbesondere sind der Druckgeber 7 und der Druckmittler 8, 9 fest miteinander verbunden.

Fig. 2 zeigt eine perspektivische Ansicht des Ausführungsbeispiels des Drucksensors 1 nach Fig. 1. In der Fig. 2 sind das Gehäuseoberteil 2 und das Gehäuseunterteil 3 des Drucksensors 1 in der Außenansicht sichtbar. Das Gehäuseoberteil 2 ist mit einem Kabel 14 verbunden, welches die Auswerteelektronik 11 des Drucksensors 1 mit einer weiteren Auswerteeinrichtung, beispielsweise einem Prozessor oder einem Computer, koppeln kann.

Das Gehäuseunterteil 3 hat an dem Eingangsabschnitt 5 des Kanals 4 eine Luer-Konus mit weiblichem Innenkegel 12 zum Koppeln des Drucksensors 1 mit einem Fördermittel, beispielsweise einem Förderschlauch zum Fördern des Fluids. Ferner hat der untere Gehäuseteil 3 in seinem Ausgangsbereich 6 des Kanals 4 einen Luer-Konus mit männlichem Außenkegel 13 zur Kopplung des Drucksensors 1 mit einem weiteren Fördermittel zum Fördern des Fluids. Das Gegenstück des Luer-Konus mit weiblichem Innenkegel 12 ist ein Luer-Konus mit männlichem Außenkegel des Fördermittels. Entsprechend ist das Gegenstück des Luer-Konus mit männlichem Außenkegel 13 ein Luer-Konus mit weiblichem Innenkegel des Fördermittels. Dazu zeigt Fig. 3 noch eine Seitenansicht des Ausführungsbeispiels des Drucksensors 1 nach Fig. 2.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Drucksensor
- 2: Gehäuseoberteil
- 3: Gehäuseunterteil
- 4: Kanal
- 5: Eingangsabschnitt
- 6: Ausgangsabschnitt
- 7: Druckgeber
- 8: Elastomer
- 9: viskoelastisches Vergussmaterial
- 10: Trägerplatine
- 11: Auswerteelektronik
- 12: Luer-Konus mit weiblichem Innenkegel
- 13: Luer-Konus mit männlichem Außenkegel
- 14: Kabel

## Patentansprüche

1. Drucksensor (1) zum Messen eines Druckes eines den Drucksensor (1) durchströmenden Fluids, mit:
einem Gehäuse (2, 3),
einem in dem Gehäuse (2, 3) angeordneten Kanal (4) zum Fördern des Fluids von einem Eingangsabschnitt (5) zu einem Ausgangsabschnitt (6),
einem in dem Gehäuse (2, 3) eingebetteten Druckgeber (7) zum Ausgeben eines zu dem Druck des den Kanal (4) durchströmenden Fluids proportionalen elektrischen Signals, und
einem zwischen dem Kanal (4) und dem Druckgeber (7) angeordneten Druckmittler (8, 9) zum Übertragen des Druckes des den Kanal (4) durchströmenden Fluids auf den Druckgeber (7), wobei zumindest ein Teil des Druckmittlers (8, 9) aus einem Elastomer (8) besteht,
**dadurch gekennzeichnet, dass** das Elastomer (8) einen Mantel um den Kanal (4) sowie eine Aufdickung des Elastomers (8) den zumindest einen Teil des Druckmittlers (8, 9) ausbildet.

2. Drucksensor nach Anspruch 1,
**dadurch gekennzeichnet,**
**dass** der Druckgeber (7) auf einem Chip integriert ist.

3. Vorrichtung nach Anspruch 2,
**dadurch gekennzeichnet,**
**dass** der Chip (7) mit einer Trägerplatine (10) verbunden ist, welche dazu eingerichtet ist, den Chip (7) zu haltern und das von dem Chip (7) ausgegebene elektrische Signal an eine mit der Trägerplatine (10) gekoppelte Auswerteelektronik (11) weiterzuleiten.

4. Drucksensor nach Anspruch 3,
**dadurch gekennzeichnet,**
**dass** die Auswerteelektronik (11) in dem Gehäuse (2, 3) integriert ist.

5. Drucksensor nach Anspruch 3 oder 4,
**dadurch gekennzeichnet,**
**dass** die Auswerteelektronik (11) als ein Microcontroller ausgebildet ist.

6. Drucksensor nach einem der Ansprüche 3 bis 5,
**dadurch gekennzeichnet,**
**dass** der Druckgeber (7) mittels Verguss eines viskolatischen Vergussmaterials (9) in dem Gehäuse (2, 3) zwischen dem Druckmittler (7) und der Trägerplatine (10) eingebettet ist.

7. Drucksensor nach Anspruch 6,
**dadurch gekennzeichnet,**
**dass** das viskolastische Vergussmaterial (9) ein Silikon ist.

8. Drucksensor nach Anspruch 6 oder 7,
**dadurch gekennzeichnet,**
**dass** der Druckmittler (8, 9) aus dem Elastomer (8) und zumindest teilweise aus dem Vergussmaterial (9) gebildet ist.

9. Drucksensor nach einem der Ansprüche 1 bis 8,
**dadurch gekennzeichnet,**
**dass** das Elastomer (8) des Druckmittlers (8, 9) ein Perfluor-Elastomer ist.

10. Drucksensor nach einem der Ansprüche 1 bis 9,
**dadurch gekennzeichnet,**
**dass** der Druckgeber (7) und der Druckmittler (8, 9) fest miteinander verbunden sind.

11. Drucksensor nach einem der Ansprüche 1 bis 10,
**dadurch gekennzeichnet,**
**dass** der Eingangsabschnitt (5) des Kanals (4) einen Luer-Konus mit weiblichem Innenkegel (12) und der Ausgangsabschnitt (6) des Kanals (4) einen Luer-Konus mit männlichem Außenkegel (13) aufweist.

12. Drucksensor nach einem der Ansprüche 1 bis 10,
**dadurch gekennzeichnet,**
**dass** der Eingangsabschnitt (5) des Kanals (4) einen Luer-Konus mit männlichem Außenkegel (13) und der Ausgangsabschnitt (6) des Kanals (4) einen Luer-Konus mit weiblichem Innenkegel (12) aufweist.

13. Drucksensor nach einem der Ansprüche 1 bis 10,
**dadurch gekennzeichnet,**
**dass** der Druckgeber (7) als ein piezo-elektrischer Druckgeber ausgebildet ist.

14. Fördervorrichtung zum Fördern eines Fluids, mit:
einem im Betrieb von einem Fluid durchströmten Drucksensor (1) nach einem der Ansprüche 1 bis 13,
einem ersten Fördermittel zum Fördern des Fluids, welches mit dem Eingangsabschnitt (5) des Drucksensors (1) gekoppelt ist, und
einem zweiten Förderelement zum Fördern des Fluids, welches mit dem Ausgangsabschnitt (6) des Drucksensors (1) gekoppelt ist.

15. Fördervorrichtung nach Anspruch 14,
**dadurch gekennzeichnet,**
**dass** das erste Förderelement und das zweite Förderelement jeweils als ein Förderschlauch ausgebildet sind.

## Claims

1. Pressure sensor (1) for measuring a pressure of a fluid flowing through the pressure sensor (1), comprising:
a housing (2, 3),
a channel (4) arranged in the housing (2, 3) for conveying the fluid from an input section (5) to an output section (6),
a pressure sensor (7) embedded in the housing (2, 3) for outputting an electric signal proportional to the pressure of the fluid flowing through the channel (4), and
a pressure mediator (8, 9) located between the channel (4) and the pressure sensor (7) for transmitting the pressure of the fluid flowing through the channel (4) to the pressure sensor (7),
wherein at least one part of the pressure mediator (8, 9) consists of an elastomer (8),
**characterised in that**
the elastomer (8) forms a coating around the channel (4) and a thickening of the elastomer (8) forms at least a part of the pressure mediator (8, 9).

2. Pressure sensor according to claim 1,
**characterised in that**
the pressure sensor (7) is integrated on a chip.

3. Device according to claim 2,
**characterised in that**
the chip (7) is connected to a carrier board (10), which is configured to hold the chip (7) and to transmit the electrical signal that is output by the chip (7) to an electronic evaluation unit (11) which is coupled to the carrier board (10).

4. Pressure sensor according to claim 3,
**characterised in that**
the electronic evaluation unit (11) is integrated into the housing (2, 3).

5. Pressure sensor according to claim 3 or 4,
**characterised in that**
the electronic evaluation unit (11) is formed as a microcontroller.

6. Pressure sensor according to any one of claims 3 to 5,
**characterised in that**
the pressure sensor (7) is embedded in the housing (2, 3) between the pressure mediator (7) and the carrier board (10) by means of grouting a viscoelastic grout material (9).

7. Pressure sensor according to claim 6,
**characterised in that**
the viscoelastic grout material (9) is a silicon.

8. Pressure sensor according to claim 6 or 7,
**characterised in that**
the pressure mediator (8, 9) is formed of the elastomer (8) and at least partially of the grout material (9).

9. Pressure sensor according to any one of claims 1 to 8,
**characterised in that**
the elastomer (8) of the pressure mediator (8, 9) is a perfluorinated elastomer.

10. Pressure sensor according to any one of claims 1 to 9,
**characterised in that**
the pressure sensor (7) and the pressure mediator (8, 9) are firmly connected to each other.

11. Pressure sensor according to any one of claims 1 to 10,
**characterised in that**
the input section (5) of the channel (4) comprises a Luer cone with a female external taper (12) and the output section (6) of the channel (4) comprises a Luer cone with a male external taper (13).

12. Pressure sensor according to any one of claims 1 to 10,
**characterised in that**
the input section (5) of the channel (4) comprises a Luer cone with a male external taper (13) and the output section (6) of the channel (4) comprises a Luer cone with a female external taper (12).

13. Pressure sensor according to any one of claims 1 to 10,
**characterised in that**
the pressure sensor (7) is formed as a piezoelectric pressure sensor.

14. Conveying device for conveying a fluid, comprising:
a pressure sensor (1) according to any one of claims 1 to 13 through which a fluid flows in operation,
a first conveying element coupled to the input section (5) of the pressure sensor (1) for conveying the fluid, and
a second conveying element coupled to the output section (6) of the pressure sensor (1) for conveying the fluid.

15. Conveying device according to claim 14,
**characterised in that**
the first conveying element and the second conveying element are respectively formed as a conveying tube.

## Revendications

1. Capteur de pression (1) pour mesurer la pression d'un fluide traversant le capteur de pression (1), comprenant :
un boîtier (2, 3),
un canal (4) disposé dans le boîtier (2, 3) pour transporter le fluide d'une section d'entrée (5) à une section de sortie (6),
un capteur de pression (7) intégré au boîtier (2, 3) pour émettre un signal électrique proportionnel à la pression du fluide traversant le canal (4),
un médiateur de pression (8, 9) arrangé entre le capteur de pression (7) et le canal (4) pour transmettre la pression du fluide passant le canal (4) au capteur de pression (7),
dans lequel au moins une partie du médiateur de pression (8, 9) est constituée d'un élastomère (8),
**caractérisé en ce que**
l'élastomère (8) forme une enveloppe autour du canal (4) et qu'un épaississement de l'élastomère (8) forme au moins une partie du médiateur de pression (8, 9).

2. Capteur de pression selon la revendication 1,
**caractérisé en ce que**
le capteur de pression (7) est intégré à une puce.

3. Appareil selon la revendication 2,
**caractérisé en ce que**
la puce (7) est connectée à une plaque de support (10) destinée à tenir la puce (7) et à transmettre le signal électrique de la puce (7) à une unité d'évaluation électronique (11) connectée à la plaque de support (10) .

4. Capteur de pression selon la revendication 3,
**caractérisé en ce que**
l'unité d'évaluation électronique (11) est intégrée au boîtier (2, 3).

5. Capteur de pression selon la revendication 3 ou 4,
**caractérisé en ce que**
l'unité d'évaluation électronique (11) est un microcontrôleur.

6. Capteur de pression selon l'une des revendications 3 à 5,
**caractérisé en ce que**
le capteur de pression (7) est intégré au boîtier (2, 3) entre le médiateur de pression (7) et la plaque de support (10) par un coulage d'un matériau de coulage viscoélastique.

7. Capteur de pression selon la revendication 6,
**caractérisé en ce que**
le matériau de coulage viscoélastique (9) est en silicone.

8. Capteur de pression selon la revendication 6 ou 7,
**caractérisé en ce que**
le médiateur de pression (8, 9) est formé par l'élastomère (8) et au moins partiellement par le matériau de coulage (9).

9. Capteur de pression selon l'une des revendications 1 à 8,
**caractérisé en ce que**
l'élastomère (8) du médiateur de pression (8, 9) est un élastomère perfluoré.

10. Capteur de pression selon l'une des revendications 1 à 9,
**caractérisé en ce que**
le capteur de pression (7) et le médiateur de pression (8, 9) sont connectés ensembles fermement.

11. Capteur de pression selon l'une des revendications 1 à 10,
**caractérisé en ce que**
la section d'entrée (5) du canal (4) comprend un adaptateur Luer avec un cône intérieur femelle (12) et la section de sortie (6) du canal (4) comprend un adaptateur Luer avec un cône extérieur mâle (13).

12. Capteur de pression selon l'une des revendications 1 à 10,
**caractérisé en ce que**
la section d'entrée (5) du canal (4) comprend un adaptateur Luer avec un cône extérieur mâle (13) et la section de sortie (6) du canal (4) comprend un adaptateur Luer avec un cône intérieur femelle (12).

13. Capteur de pression selon l'une des revendications 1 à 10,
**caractérisé en ce que**
le capteur de pression (7) est un capteur de pression piézoélectrique.

14. Appareil de convoyage pour convoyer un fluide, comprenant:
un capteur de pression (1) selon l'une des revendications 1 à 13, qui est traversé par un fluide lors de son utilisation,
un premier élément de convoyage pour convoyer le fluide, qui est connecté à la section d'entrée (5) du capteur de pression (1), et
un deuxième élément de convoyage pour convoyer le fluide, qui est connecté à la section de sortie (6) du capteur de pression (1).

15. Appareil de convoyage selon la revendication 14,
**caractérisé en ce que**
le premier élément de convoyage et le deuxième élément de convoyage sont respectivement des tuyaux de convoyage.
